# EUROPEAN PATENT APPLICATION

(11) **EP 1 970 642 A2**
(43) Date of publication of application: **17.09.2008**
(21) Application number: 08380064.9
(22) Date of filing: 03.03.2008
(51) Int. Cl.: F24J 2/40, F24J 2/46

(54) **System for solar thermic energy regulation and its use**

(30) Priority: 09.03.2007 ES 200700631
(71) Applicant: Castellanos Ausejo, Jose Félix, 26142 Villamediana (La Rioja) (ES)
(72) Inventor: Castellanos Ausejo, Jose Félix, 26142 Villamediana (La Rioja) (ES)
(74) Representative: Maslanka, Dorota

(57) **Abstract**

The invention relates to a system for regulation of the solar thermal energy, which comprises a screen of mobile blades (1), connected with a thermostatic probe (2) immersed in the fluid of the facility circuit (7) and its use in the facilities powered by the solar thermal energy.

## Description

### Field of the invention

The present invention relates to a system for solar thermal energy regulation and its use in facilities powered by solar thermal energy.

### Background of the invention

Nowadays there exists a large demand for use of renewable energies, among them light energy or thermal energy. For example, the energy produced by solar batteries can be used in various applications, like for heating of sanitary water, swimming pools, central heating or several at the same time.

The goal of the existing systems is a maximum use of the light energy. However such systems require some special protections and safety means in order to ensure their proper use and effective functioning.

In the presently applied facilities there is known the use of chemically treated fluids in the batteries circuits in order to avoid the risk of freezing. Nevertheless, such chemically treated fluids are usually contaminative.

It is also known the use of expansion vessels which permit to avoid high pressures caused by the expansion of the fluid. Said expansion used to be caused by overheating originated by an excessive exposure on a sunlight. However said tanks are large and therefore significantly reduce the area which otherwise could be assigned as a space for energy accumulation.

It is also known the use of security valves to prevent overpressures occurring in the hydraulic circuit caused by an excessive exposure on a sunlight. In such situations said valves would be activated in order to protect the system, but at the same time they would cause the loss of the fluid, which would be released from the circuit and directed outside as a drain. It must also be noted that these liquids are usually contaminative.

On the other hand, high temperatures can cause boiling of the fluid. In this situation it can be observed its transformation from a liquid phase into a gaseous phase, and its subsequent loss through the bubble separation valve or automatic purge.

According to the above there is an existing need for a system which would permit the exposure on a sunlight required in each moment, allowing to achieve a previously determined temperature adequate for a facility used. This way it could be avoided the occurrence of possible failures, damages or quick ageing of the facility.

### Description of the invention

The object of the present invention is therefore a system for a solar thermal energy regulation which comprises a screen of mobile blades connected with a thermostatic probe immersed in the fluid of the facility circuit.

The subject of the present invention allows to keep a suitable facility temperature, what at the same time allows to avoid high temperatures and overheating, which normally cause damages, ageing or significant expansion of the fluid causing its subsequent loss. What is more, the system is automatic and therefore it does not need any other kind of energy, such as electric or combustible, since the temperature of the fluid warmed by the sunlight in the one which activates the mechanism.

Is therefore the aim of the present invention also the use of the system in the facilities powered by the solar thermal energy, in particular in solar batteries or in any spaces.

Embodiments of the present invention will now be described in detail, by way of example, with reference to the accompanying drawings in which:

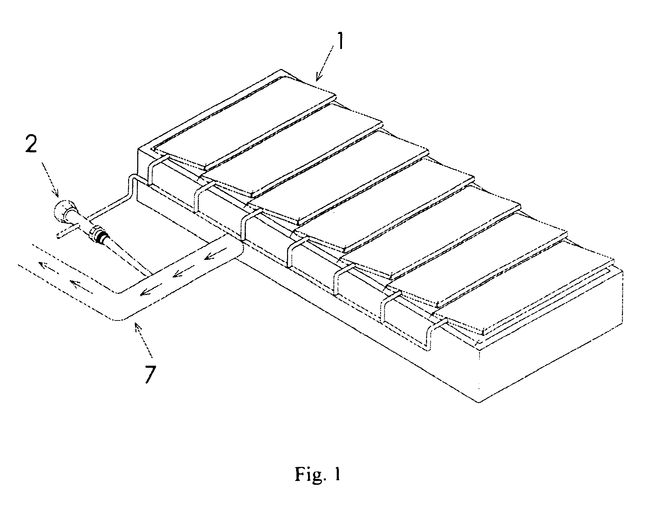

Figure 1 illustrates a general view of the system.
Figure 2 illustrates the system having the mobile blades in the opened state.
Figure 3 illustrates the system having the mobile blades in the closed state.

The system for regulation of the solar thermal energy according to the invention comprises a screen of mobile blades 1, connected with an autonomous thermostatic probe 2 immersed through its bulb 3 in the fluid of the facility circuit 7.

In one embodiment of the invention, said thermostatic probe 2 is immersed in the fluid of the solar thermal battery circuit.

In other embodiment of the invention, said thermostatic probe 2 is immersed in the environment fluid.

The system, in a preferred embodiment of the invention, comprises a screen of mobile blades 1, which is situated inside a frame 4 and comprises one or more mobile blades secured through their longitudinal axes and joined with the use of a mobile fastening means 5, preferably a flat, connected with said thermostatic probe 2, preferably with the use of a lever 6.

Said thermostatic probe which is immersed in the fluid, in the one of the battery circuit or in the one of the environment, detects its temperature and activates the movement of mobile fastening means 5. This way it activates the movement of the blades through their axes the way they open, maintain or close the passage of the light towards the inside of the facility powered by the solar thermal energy. That is how it is possible to achieve the temperature, which is necessary and adequate for the used facility, by simple adjustment of the grade of the blades aperture.

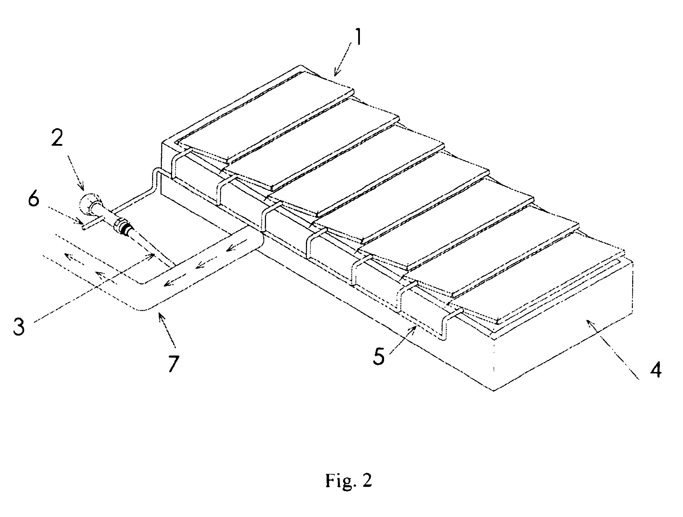

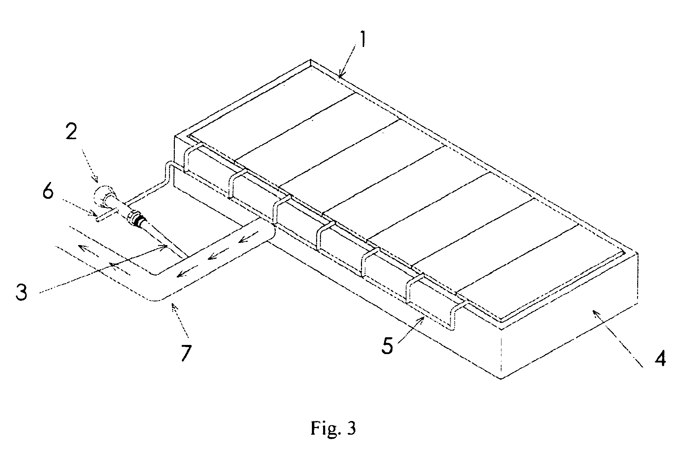

The opened state of the system has been shown on the figure 2, while the closed state of the system has been shown on the figure 3.

The system, subject of the invention, is powered directly or indirectly by the solar thermal energy and never by electric energy or other combustible or pollutant energies. It is simply the temperature of the fluid warmed by the sunlight which activates the mechanism of thermostatic probe 2, which by means of lever 6, connected by fastening mobile means 5, turns the mobile blades 1 closing the system to a necessary degree when the probe detects a proper temperature, this way preventing passage of the excessive sunlight, or opening the system to a necessary degree when there is a need of the heat, this way allowing increase in the passage of the sunlight.

The system according to the invention can be used in almost any facilities powered by the solar thermal energy, in a preferred embodiment in solar batteries, but also in other types of solar collectors. By the way of example, the system can also be used in different spaces, such as compartments, rooms or halls and the like, having skylights, windows or stained-glass apertures oriented in the sunlight direction. Therefore such spaces, due to exposure on excessive sunlight, are at risk of unnecessary high temperatures in their environments. By installation of the system according to the invention it is possible to control the internal temperature caused by the sunlight by controlling its passage.

The measurements of the system depend on a surface of the facility where it is to be mounted, since it should cover the surface substantially entirely in order to assure its maximum efficiency.

Thank to the system disclosed in the invention it is possible to eliminate most of the inconveniences associated with the systems known form the prior art. By the way of example, in case of solar batteries, it is possible to avoid high pressures caused by the fluid expansion from the circuit and also the loss of the fluid caused by its evaporation as a result of boiling, since the invention enables sunlight passage regulation towards the inside of the facility.

Owing to the above mentioned advantages, said system allows to reduce ageing of the solar facility, but above all it does not need to be fed by external energy in order to induce the movement of the blades, since its mechanism is automatic.

It is also possible to reduce the amount of the materials required for the maintenance of the facility, since the system according to the invention requires practically minimum maintenance, which solely includes simple periodic inspections in order to check its functioning and state of impurities.

The entire invention can be carried out in practice in other possible embodiments, which can be different in details from the ones as above disclosed, but these shall remain within the demanded scope of patent protection. So it is possible to carry out the invention in any form and dimensions, with the use of any adequate materials, but these shall remain within the field and scope of the invention as defined in the appended patent claims.

## Claims

1. System for regulation of the solar thermal energy, which comprises a screen of mobile blades (1), connected with a thermostatic probe (2) immersed in the fluid of the facility circuit.

2. System according to claim 1, wherein said thermostatic probe (2) is immersed in the fluid of the solar battery circuit.

3. System according to claim 1, wherein said thermostatic probe (2) is immersed in the fluid of the environment.

4. System according to claim 1, wherein said screen of mobile blades (1) is situated inside a frame (4) and comprises one or more mobile blades secured through their longitudinal axes and joined with the use of a mobile fastening means (5) connected with said thermostatic probe (2).

5. System according to claim 4, wherein said mobile fastening means (5) is a flat.

6. System according to claim 4, wherein said mobile fastening means (5) are connected with said thermostatic probe (2) with the use of a lever (6).

7. System according to claim 4, wherein said thermostatic probe (2) activates the movement of said mobile fastening means (5).

8. Use of the system according to any one of the previous claims in facilities powered by the solar thermal energy.

9. Use of the system according to claim 8, in solar thermal batteries.

10. Use of the system according to claim 8, in the spaces.
